# EUROPÄISCHE PATENTSCHRIFT

(11) **EP 3 461 654 B1**
(45) Veröffentlichungstag und Bekanntmachung des Hinweises auf die Patenterteilung: **05.08.2020**
(21) Anmeldenummer: 18180267.9
(22) Anmeldetag: 28.06.2018
(51) Int. Cl.: B60C 1/00

(54) **FAHRZEUGREIFEN**
VEHICLE TYRES
PNEU DE VÉHICULE

(30) Priorität: 27.09.2017 DE 102017217148
(43) Veröffentlichungstag der Anmeldung: 03.04.2019
(73) Patentinhaber: Continental Reifen Deutschland GmbH, 30165 Hannover (DE)
(72) Erfinder: Jeromin, Dieter, 30419 Hannover (DE); Schellenberg, Marion, 30171 Hannover (DE)
(74) Vertreter: Finger, Karsten

(56) Entgegenhaltungen:
- EP-A1- 2 987 828
- EP-A1- 3 088 215
- WO-A1-2014/124535
- US-A1- 2016 167 321

## Beschreibung

Die Erfindung betrifft einen Fahrzeugreifen.

Es ist bekannt, dass Fahrzeugreifen wenigstens eine Seitenwand aufweisen können, die nicht schwarz ist, sondern bunte oder weiße Elemente umfasst, die nach außen sichtbar sind. Die Kautschukmischungen sind hierzu frei von Ruß und enthalten Weiß- und/oder Buntpigmente. Ferner enthalten die Kautschukmischungen Butyl- und/oder Halobutyl-Kautschuk und Ethylen-Propylen-Dien-Kautschuk (EPDM), um Verfärbungen durch diffundierende Mischungsbestandteile der darunter liegenden Reifenbauteile und ihren Mischungen zu verhindern.
Derartige Seitenwände sind beispielsweise in der US 8720513 B2 und der US 5964969 offenbart.

Allerdings weisen Kautschukmischungen mit den genannten Kautschuken Nachteile hinsichtlich der Abriebbeständigkeit auf. Die Seitenwände sind somit durch z. B. Kontakt mit dem Bordstein einem vergleichsweise hohen Abrieb ausgesetzt, was insbesondere bei den dekorativen Seitenwänden von Nachteil ist und insbesondere die Haltbarkeit des Reifens verringert.

Der vorliegenden Erfindung liegt daher die Aufgabe zugrunde, einen Fahrzeugluftreifen bereitzustellen, deren Seitenwand bezüglich der Abriebbeständigkeit optimiert ist, sodass es möglich ist, bunte oder dekorative Elemente in der Seitenwand einzusetzen und somit gleichzeitig ausgehend von dem Stand der Technik eine verbesserte Haltbarkeit des Reifens zu erzielen.

Die Aufgabe wird erfindungsgemäß dadurch gelöst, dass der Fahrzeugreifen wenigstens eine Seitenwand umfasst, die wenigstens eine erste Kautschukmischung aufweist, die wenigstens ein Butyl-Kautschuk-Ionomer enthält.

Überraschenderweise wurde gefunden, dass eine Kautschukmischung für die Seitenwand von Fahrzeugreifen eine verbesserte Abriebbeständigkeit aufweist, wenn sie wenigstens ein Butyl-Kautschuk-Ionomer enthält.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die in dieser Schrift verwendete Angabe phr (parts per hundred parts ofrubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die erfindungsgemäß enthaltenen Butyl-Kautschuk-Ionomere zählen dabei im Rahmen der vorliegenden Erfindung zu den 100 Gewichtsteilen Kautschuk dazu.

Die Dicken der Seitenwandmischungen, die gekrümmt ausgeführt sind, werden dadurch bestimmt, dass an zwei verschiedenen Punkten der gekrümmten Seitenwand jeweils eine Tangente angelegt wird und jeweils die Dicke senkrecht zu dieser Tangente bestimmt wird. Anschließend wird der Mittelwert dieser beiden Dicken als Dicke der jeweiligen Mischung / des jeweiligen Bereiches der Mischung angegeben.

Butyl-Kautschuk-Ionomere sind dem Fachmann bekannt und beispielsweise in der US 20160215131 A1 offenbart. Es handelt sich um Butyl-Kautschuk, der einen Anteil an ionischen Gruppen aufweist.
Bevorzugt weist das Butyl-Kautschuk-Ionomer sämtlicher Ausführungsformen einen Ionen-Gehalt von 0,2 bis 1,0 mol-% auf. Ein geeignetes Butyl-Kautschuk-Ionomer ist unter dem Handelsnamen X Butyl™ I4565 P der Firma Lanxess erhältlich.

Erfindungsgemäß weist die Seitenwand wenigstens eine erste Kautschukmischung auf, die wenigstens ein Butyl-Kautschuk-Ionomer enthält. Es ist dabei denkbar, dass die Seitenwand durchgängig aus einer einzigen Kautschukmischung besteht, die wenigstens ein Butyl-Kautschuk-Ionomer enthält. Eine derartige Seitenwand ist hinsichtlich der Abriebbeständigkeit optimiert und kann alle denkbaren Füllstoffsysteme enthalten, wie insbesondere rußhaltig und damit schwarz sein, oder eine weiße oder bunte Seitenwand sein und hierzu entsprechend helle und/oder bunte Füllstoffe und Pigmente enthalten.

Gemäß vorteilhafter Ausführungsformen enthält die erste Kautschukmischung wenigstens ein Buntpigment. Dies gilt im Rahmen der vorliegenden Erfindung allgemein für die erste Kautschukmischung und im Speziellen im Zusammenhang mit den vorliegend beschriebenen Konstruktionen unterschiedlicher Kautschukmischungen der Seitenwand.

Gemäß vorteilhafter Ausführungsformen enthält die erste Kautschukmischung wenigstens einen anorganischen hellen Füllstoff und/oder ein Weißpigment. Dies gilt im Rahmen der vorliegenden Erfindung allgemein für die erste Kautschukmischung und im Speziellen im Zusammenhang mit den vorliegend beschriebenen Konstruktionen unterschiedlicher Kautschukmischungen der Seitenwand.

Die erste Kautschukmischung enthält gemäß einer bevorzugten Ausführungsform der Erfindung wenigstens ein Buntpigment und wenigstens einen anorganischen hellen Füllstoff.

In den Ausführungsformen, in denen die erste Kautschukmischung wenigstens ein Buntpigment und/oder wenigstens einen hellen anorganischen Füllstoff enthält, ist sie gemäß einer bevorzugten Weiterbildung frei von Ruß, d. h. enthält 0 phr Ruß.

Gemäß einer weiteren Ausführungsform der Erfindung enthält die erste Kautschukmischung wenigstens einen Ruß und ist damit schwarz.

Im Rahmen der vorliegenden Erfindung werden unter dem Ausdruck "heller anorganischer Füllstoff" alle dem Fachmann bekannten verstärkenden oder nicht verstärkenden Füllstoffe verstanden, wie insbesondere Kieselsäure, Titandioxid, sämtliche Modifikationen von Calciumcarbonat (CaCO₃) wie insbesondere Kreide, Silikate, insbesondere Schichtsilikate wie Talk und Kaolinit.
Es ist auch denkbar, dass eine Trockengemischverbindung wie Kaolin eingesetzt wird. Einige der hellen anorganischen Füllstoffe sind zugleich Weißpigmente, wie insbesondere Titandioxid.
Zinkoxid kann im Rahmen der vorliegenden Erfindung in Mengen von mehr als 10 phr ebenfalls als Weißpigment verwendet werden. In geringeren Mengen, wie beispielsweise 1 bis 5 phr, ist es bevorzugt wie dem Fachmann bekannt Teil des Aktivatorsystems bei der Vulkanisation.

Buntpigmente sind dem Fachmann bekannt. Pigmente lassen sich in organische und organische Pigmente unterteilen.
Beispiele für organische Buntpigmente sind beispielsweise Azofarbstoffe.
Beispiele für anorganische Buntpigmente sind beispielsweise Eisenoxid, Chromdioxid, Ultramarin-Pigmente
Gemäß einer bevorzugten ausführungsform der Erfindung handelt es sich um anorganische Buntpigmente.

Im Rahmen der vorliegenden Erfindung können bei allen Ausführungsformen, in denen wenigstens ein Ruß umfasst ist, alle denkbaren Ruß-Typen verwendet werden. Unter Ruß wird dabei insbesondere "Industrieruß" verstanden.
In einer Ausführungsform hat der Ruß eine Jodzahl, gemäß ASTM D 1510, die auch als Jodadsorptionszahl bezeichnet wird, zwischen 4 und 250 g/kg, bevorzugt 4 bis 180 g/kg, besonders bevorzugt 40 bis 180 g/kg, und ganz besonders bevorzugt 40 bis 130 g/kg, und eine DBP-Zahl gemäß ASTM D 2414 von 10 bis 200 ml/100 g, bevorzugt 25 bis 200 ml/100g, besonders bevorzugt 60 bis 200 ml/100g.
Die DBP-Zahl gemäß ASTM D 2414 bestimmt das spezifische Absorptionsvolumen eines Rußes oder eines hellen Füllstoffes mittels Dibutylphthalat.

Bevorzugte und bekannte Ruße sind beispielsweise N660 und N550, mit einer DBP-Zahl gemäß ASTM D 2414 von 60 bis 130 ml/100 g, bevorzugt 75 bis 95 ml/100 g.
Ein geeigneter Ruß ist beispielsweise der Ruß N 660 mit einer Jodadsorptionszahl gemäß ASTM D 1510 von 36 g/kg und einer DBP-Zahl gemäß ASTM D 2414 von 90 ml/100g. Aber auch ein Ruß mit einer vergleichsweise niedrigen Jodadsorptionszahl, wie N 990, ist denkbar und geeignet.

Die erste Kautschukmischung enthält gemäß bevorzugten Ausführungsformen folgende Bestandteile Kautschuksystems:
0 bis 30 phr wenigstens eines EPDM-Kautschuks
0 bis 99 phr wenigstens eines Butyl- und/oder Halobutyl-Kautschuks
0 bis 50 phr wenigstens eines natürlichen Polyisoprens (NR) und/oder synthetischen Polyisoprens (IR) und
1 bis 40 phr wenigstens eines Butyl-Kautschuk-Ionomers,
wobei bevorzugt wenigstens einer der Kautschuke ausgewählt aus EPDM-Kautschuk, Butyl-Kautschuk, Halobutyl-Kautschuk, natürlichem Polyisopren, synthetischem Polyisoprens in dem jeweils genannten Mengenbereich enthalten ist.

Butyl- und/oder Halobutyl-Kautschuk sind dem Fachmann bekannt. Geeignete Halobutylkautschuke sind insbesondere Bromo- und Chlorobutyl-Kautschuk.
Butyl- und/oder Halobutyl-Kautschuk sind optional in der ersten Kautschukmischung enthalten. Sie können ausgehend vom Stand der Technik teilweise oder sogar vollständig durch 1 bis 40 phr wenigstens eines Butyl-Kautschuk-Ionomers ersetzt werden.
In Ausführungsformen, in denen wenigstens ein Butyl- und/oder Halobutyl-Kautschuk in der ersten Kautschukmischung enthalten ist, beträgt die untere Grenze für die Gesamtmenge an Butyl- und/oder Halobutyl-Kautschuk bevorzugt 4 phr.

Die erste Kautschukmischung enthält gemäß einer bevorzugten Ausführungsform 4 bis 99 phr, bevorzugt 30 bis 99 phr, besonders bevorzugt 50 bis 99 phr, ganz besonders bevorzugt 70 bis 99 phr, wenigstens eines Butyl- und/oder Halobutyl-Kautschuks.

Die erste Kautschukmischung enthält gemäß einer bevorzugten Ausführungsform 5 bis 30 phr, besonders bevorzugt 10 bis 30 phr, ganz besonders bevorzugt 15 bis 30 phr, wenigstens eines EPDM-Kautschuks.
Insbesondere durch die Verwendung von Halobutyl-Kautschuk, aber auch EPDM-Kautschuk kann die Seitenwand optisch hervorgehoben werden, wobei sie ein glänzendes Erscheinungsbild annehmen kann.

Die erste Kautschukmischung enthält gemäß bevorzugten Ausführungsformen folgende Bestandteile Kautschuksystems:
5 bis 30 phr wenigstens eines EPDM-Kautschuks
0 bis 74 phr wenigstens eines Butyl- und/oder Halobutyl-Kautschuks
15 bis 50 phr wenigstens eines natürlichen Polyisoprens (NR) und/oder synthetischen Polyisoprens (IR) und
1 bis 40 phr wenigstens eines Butyl-Kautschuk-Ionomers,

Gemäß vorteilhafter Ausführungsformen, die unten näher ausgeführt werden, kann die Seitenwand weitere Kautschukmischungen mit oder ohne Butyl-Kautschuk-Ionomer aufweisen.

Gemäß einer vorteilhaften Weiterbildung der Erfindung weist die Seitenwand wenigstens eine zweite Kautschukmischung auf, die wenigstens ein Butyl-Kautschuk-Ionomer enthält. Die erste und die zweite Kautschukmischung enthalten somit beide ein Butyl-Kautschuk-Ionomer und können sich aber bezüglich der anderen Bestandteile, wie sonstige Kautschuke, Füllstoffe etc. voneinander unterscheiden.
Hierdurch können gemäß vorteilhafter Ausführungsformen rußhaltige und damit schwarze Seitenwandbereiche mit nicht-schwarzen Seitenwandbereichen kombiniert werden, wobei dann in beiden Mischungssystemen die Abriebbeständigkeit optimiert ist und die Seitenwand somit über einen möglichst großen Bereich eine verbesserte Haltbarkeit aufweist.

Gemäß einer vorteilhaften Ausführungsform der Erfindung bedeckt die zweite Kautschukmischung die erste Kautschukmischung vollständig oder teilweise nach radial und axial außen.
Hierbei enthält die zweite Mischung beispielsweise Ruß und die erste Mischung kein Ruß und dafür beispielsweise wenigstens einen hellen anorganischen Füllstoff und/oder wenigstens ein Buntpigment. Die erste Kautschukmischung ist dabei in Bereichen der Seitenwand nach axial außen sichtbar, d. h. begrenzt den Fahrzeugreifen nach axial außen. Die nach außen sichtbaren Bereiche der ersten Kautschukmischung können dabei beliebige Dimensionen annehmen.
Mit dieser Ausführungsform können beispielsweise ein Schriftbild oder andere sichtbare Elemente auf der Seitenwand abgebildet sein.
Es ist aber auch denkbar, dass umlaufend ein heller oder bunter Streifen der ersten Kautschukmischung nach axial außen sichtbar ist, wenn die Bereiche der ersten Kautschukmischung, die nicht von der zweiten Kautschukmischung bedeckt sind, umlaufend gleich ausgestaltet sind.

In den Bereichen, in denen die zweite Kautschukmischung die erste Kautschukmischung bedeckt und somit die axial äußerste Schicht der Seitenwand ausbildet, beträgt die Schichtdicke der zweiten Kautschukmischung bevorzugt 0,1 bis 1 mm.

Gemäß einer bevorzugten Ausführungsform der Erfindung enthält die zweite Kautschukmischung 1 bis 100 phr wenigstens eines Rußes.

Gemäß einer bevorzugten Ausführungsform der Erfindung enthält die zweite Kautschukmischung 5 bis 30 phr, besonders bevorzugt 10 bis 30 phr, ganz besonders bevorzugt 15 bis 30 phr, wenigstens eines Ethylen-Propylen-Dien-Kautschuks (EPDM).

Die zweite Kautschukmischung enthält gemäß bevorzugten Ausführungsformen folgende Bestandteile Kautschuksystems:
5 bis 30 phr, besonders bevorzugt 10 bis 30 phr, ganz besonders bevorzugt 15 bis 30 phr, wenigstens eines EPDM-Kautschuks
0 bis 69 phr wenigstens eines Butyl- und/oder Halobutyl-Kautschuks 20 bis 50 phr wenigstens eines natürlichen Polyisoprens (NR) und/oder synthetischen Polyisoprens (IR)
1 bis 40 phr wenigstens eines Butyl-Kautschuk-Ionomers

Butyl- und/oder Halobutyl-Kautschuk sind also optional in der zweiten Kautschukmischung enthalten. Sie können somit ausgehend vom Stand der Technik teilweise oder sogar vollständig durch 1 bis 40 phr wenigstens eines Butyl-Kautschuk-Ionomers ersetzt werden.
In Ausführungsformen, in denen wenigstens ein Butyl- und/oder Halobutyl-Kautschuk in der zweiten Kautschukmischung enthalten ist, beträgt die untere Grenze für die Gesamtmenge an Butyl- und/oder Halobutyl-Kautschuk bevorzugt 4 phr.

Gemäß einer vorteilhaften Weiterbildung der Erfindung weist die Seitenwand wenigstens eine weitere Kautschukmischung auf. Die weitere Kautschukmischung enthält bevorzugt kein Butyl-Kautschuk-Ionomer und kein EPDM- und kein Halobutyl- und/oder Butyl-Kautschuk, d. h. 0 phr der jeweiligen genannten Kautschuke. Diese weitere Kautschukmischung stellt somit bevorzugt eine herkömmliche Seitenwandmischung dar. Die weitere Kautschukmischung enthält hierzu als Kautschukkomponenten bevorzugt wenigstens einen Kautschuk, der ausgewählt ist aus der Gruppe bestehend aus Butadien-Kautschuk, Naturkautschuk und Styrol-Butadien-Kautschuk. Hierdurch kann die Seitenwand so ausgestaltet sein, dass lediglich die nach außen sichtbaren und etwaigem Abrieb ausgesetzten Bereiche das beschriebene System aus EPDM- und Halobutyl- und/oder Butyl-Kautschuk sowie Butyl-Kautschuk-Ionomer enthalten, und z. B. radial innere Bereiche der Seitenwand hinsichtlich der Haltbarkeit und des Wärmeaufbaus des Reifens optimiert sind.

Bevorzugt ist es dabei gemäß einer vorteilhaften Ausführungsform, dass die erste Kautschukmischung und/oder die zweite Kautschukmischung vollständig oder teilweise radial und axial außerhalb der weiteren Kautschukmischung angeordnet sind und zumindest Bereiche der ersten und/oder der zweiten Kautschukmischung den Fahrzeugreifen nach radial und axial außen begrenzen.

Die Dicke der ersten Kautschukmischung beträgt gemäß einer vorteilhaften Ausführungsform 1 bis 3 mm, beispielsweise 2 mm, wenn sie die weitere Kautschukmischung nach axial außen bedeckt. Hierbei enthält die erste Kautschukmischung bevorzugt wenigstens einen hellen anorganischen Füllstoff und/oder wenigstens ein Buntpigment und ist bevorzugt frei von Ruß.

Die Dicke der ersten Kautschukmischung beträgt gemäß einer weiteren vorteilhaften Ausführungsform 0 bis 1 mm, beispielsweise 0,5 mm, wenn sie die weitere Kautschukmischung nach axial außen bedeckt. Hierbei enthält die erste Kautschukmischung bevorzugt wenigstens einen Ruß und ist damit schwarz. Ferner enthält die Kautschukmischung in dieser Ausführungsform bevorzugt 5 bis 30 phr wenigstens eines EPDM-Kautschuks.

Die weitere Kautschukmischung weist gemäß vorteilhaften Ausführungsformen eine Schichtdicke von 1 bis 4 mm auf. In den Bereichen, in denen sie nicht bedeckt ist, kann sie entsprechend dicker ausgeführt sein.

In den Bereichen, in denen die zweite Kautschukmischung die erste Kautschukmischung bedeckt und somit die axial äußerste Schicht der Seitenwand ausbildet, beträgt die Schichtdicke der zweiten Kautschukmischung bevorzugt 0,1 bis 1 mm.

Gemäß vorteilhafter Ausführungsformen kann die erste Kautschukmischung in Form eines durchgängigen Abschnittes oder in Form von zwei oder mehreren räumlich voneinander getrennten Teilabschnitten der Seitenwand ausgeführt sein. Diese Ausführungsformen sind in Kombination mit allen beschriebenen zweiten und/oder weiteren Kautschukmischungen denkbar. Im Fall von Teilabschnitten der ersten Kautschukmischung sind diese beispielsweise von einer rußhaltigen und bezüglich des Polymersystems herkömmlichen weiteren Kautschukmischungen umgeben.

Es sind mehrere Möglichkeiten bezüglich der Anordnung der ersten Kautschukmischung und der zweiten Kautschukmischung denkbar:
1. Möglichkeit: Ein Teilabschnitt der ersten Kautschukmischung ist nach axial außen nicht bedeckt und damit sichtbar.
2. Möglichkeit: Ein Teilabschnitt der ersten Kautschukmischung ist nach axial außen von der zweiten Kautschukmischung bedeckt und damit nicht sichtbar.
3. Möglichkeit: Ein Teilabschnitt der ersten Kautschukmischung ist nach axial außen teilweise bedeckt und damit teilweise sichtbar.
Diese Teilabschnitte sind in radialer Richtung räumlich von anderen Abschnitten der ersten Mischung getrennt.
Die genannten Möglichkeiten können innerhalb einer Seitenwand einzeln auftreten oder beliebig miteinander kombiniert werden. Mit den genannten Möglichkeiten ist der Vorteil verbunden, dass unterschiedliche Reifen, deren Seitenwand nach axial außen sichtbar unterschiedlich ausgestaltet werden soll, vereinfacht hergestellt werden können. Je nachdem, in welchen Bereichen die erste Kautschukmischung sichtbar gemacht werden soll, kann die zweite Kautschukmischung axial außen entfernt werden.
Für die genannten Möglichkeiten beträgt die bevorzugte Dicke der zweiten Kautschukmischung 0,1 bis 1 mm.

Der erfindungsgemäße Fahrzeugreifen weist ansonsten Bauteile, wie im Stand der Technik bekannt auf, insbesondere einen Laufstreifen, ein Gürtelpaket, eine Karkasslage, eine Innenschicht, Wulstbereiche umfassend u. a. Wulstkerne, Wulstkernreiter, und Hornprofile. Im Schulterbereich des Laustreifens können axial auf einer oder beiden Seiten Schulterstreifen angeordnet sein, die insbesondere den Wärmeaufbau und die strukturelle Haltbarkeit des Reifens optimieren.

Gemäß einer bevorzugten Weiterbildung der Erfindung weist der Fahrzeugreifen einen Schulterstreifen und ein Hornprofil auf und die erste und/oder die zweite Kautschukmischung ist so angeordnet, dass sie nach axial außen den Schulterstreifen und/oder das Hornprofil vollständig oder zumindest teilweise bedecken. Hierdurch können auch in diesem Bereich dekorative Seitenwandmischungen verwendet werden und Schulterstreifen und/oder Hornprofil sind vollständig oder zumindest teilweise nach außen vor Abriebschäden geschützt.

Prinzipiell sind alle genannten Kautschukmischungen der Seitenwand und deren Anordnungen miteinander zu Ausführungsformen kombinierbar.

Neben den bereits oben aufgeführten Bestandteilen können die erste, die zweite sowie die weitere Kautschukmischung jeweils übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), sowie weitere Alterungsschutzmittel, die insbesondere in weißen oder bunten Mischungen nicht verfärbend wirken,
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.
Der Weichmacher ist bevorzugt ausgewählt aus der Gruppe bestehend aus den oben genannten Weichmachern.
Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.
Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.

Es ist bekannt, dass manche Öle oder Alterungsschutzmittel verfärbend wirken können und sich somit in hellen oder farbigen Seitenwandmischungen auf Dauer negativ bemerkbar machen können. Diese Substanzen sind dem Fachmann bekannt und werden in solchen Mischungen üblicherweise nicht oder nur eingeschränkt verwendet.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) in den oben genannten Mengen enthalten sein.
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m2/g auf. Es kann aber auch ein Zinkoxid mit einer BET-Oberfläche von 10 bis 100 m2/g, wie z.B. so genannte "nano-Zinkoxide", verwendet werden.

Die Vulkanisation der ersten, der zweiten und der weiteren Kautschukmischung wird bevorzugt in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können.

Schwefel und/oder weitere Schwefelspender sowie ein oder mehrere Beschleuniger werden im letzten Mischungsschritt der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.
DipDis (Bis-(Diisopropyl)thiophosphoryldisulfid) und/oder Bis(O,O-2-ethylhexylthiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Die benötigte Menge an weiterem Schwefel in Form von elementarem Schwefel und/oder weiterem Schwefelspender richtet sich nach dem Einsatzgebiet der jeweiligen Kautschukmischung.

Bei der Verwendung von Butylkautschuk, Halobutylkautschuk und/oder Ethylen-Propylen-Dien-Kautschuk werden bevorzugt die dem Fachmann für diese Kautschuke bekannten Vulkanisationssysteme verwendet.

Die Herstellung des erfindungsgemäßen Fahrzeugreifens erfolgt auf dem Fachmann bekannte Weise, wobei insbesondere die Seitenwand im Fall von zwei oder mehreren Abschnitten von zwei oder mehreren Kautschukmischungen dadurch aufgebaut wird, dass die jeweiligen Seitenwandabschnitte als Kautschukfertigmischungen extrudiert und anschließend entsprechend auf/in den Reifenrohling aufgebracht werden.
Der Reifenrohling wird dann wie im Stand der Technik bekannt vulkanisiert.

Die Erfindung soll nun anhand von Vergleichs- und Ausführungsbeispielen, die in den folgenden Tabellen und Figuren zusammengefasst sind, näher erläutert werden.

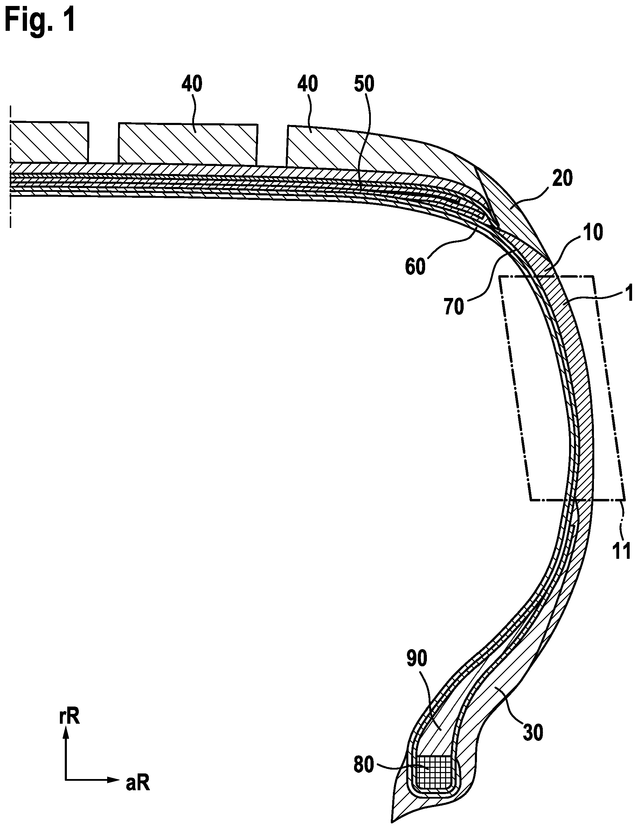

Figur 1 ist eine schematische Darstellung einer Hälfte eines Querschnitts eines erfindungsgemäßen Fahrzeugreifens. Der Querschnitt zeigt einen Laufstreifen mit Profilblöcken 40, ein Gürtelpaket 50, eine Innenschicht 60, eine Seitenwand 10, ein Hornprofil 30, eine Karkasslage 70, einen Wulstkern 80 und einen Wulstkernreiter 90. Die Kautschukmischung 1 der Seitenwand 10 enthält wenigstens ein Butyl-Kautschuk-Ionomer. In dieser Ausführungsform besteht die Seitenwand 10 aus der Kautschukmischung 1, d.h. die Seitenwand 10 weist keine weitere Kautschukmischung auf.

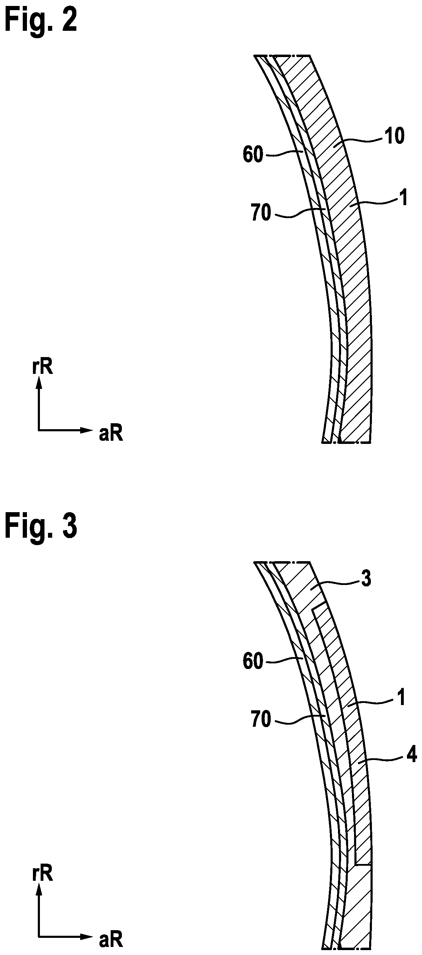

In Fig. 2 ist ein vergrößerter Ausschnitt 11 des mittleren Bereiches der Seitenwand 10 mit radial und axial innen liegender Karkasslage 70 und Innenschicht 60 aus Fig. 1 gezeigt.

In Fig. 3 ist der gleiche Ausschnitt gezeigt wie in Fig. 2 mit dem Unterschied, dass die Seitenwand eine erste Kautschukmischung 1 enthaltend wenigstens ein Butyl-Kautschuk-Ionomer und eine weitere Kautschukmischung 3 aufweist. Die erste Kautschukmischung 1 ist in Form eines durchgängigen Abschnittes 4 der Seitenwand ausgeführt und bedeckt die weitere Kautschukmischung 3 in diesem Bereich nach axial außen. Die weitere Kautschukmischung 3 ist ebenfalls durchgängig ausgeführt.
Die Dicke der ersten Kautschukmischung 1 beträgt bevorzugt 1 bis 3 mm, beispielsweise 2 mm.
Es ist ebenfalls denkbar, dass die erste Kautschukmischung 1 in Form von räumlich voneinander getrennten Teilabschnitten 5 ausgeführt ist, die dann von der weiteren Kautschukmischung 3 umgeben sind, was in Fig. 3 nicht gezeigt ist.

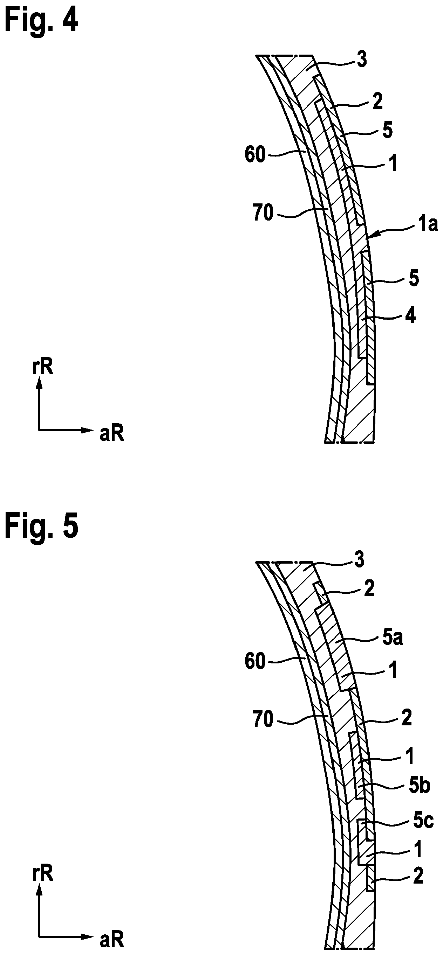

In Fig. 4 ist der gleiche Ausschnitt gezeigt wie in Fig. 3 mit dem Unterschied, dass die Seitenwand zusätzlich eine zweite Kautschukmischung 2 enthaltend wenigstens ein Butyl-Kautschuk-Ionomer aufweist. Die zweite Kautschukmischung 2 bedeckt dabei teilweise die erste Kautschukmischung 1 nach axial außen, sodass die zweite Kautschukmischung 2 in Teilabschnitten 5 ausgeführt ist. Dies ist im Bereich 1a in Fig. 4 gezeigt.
Hierbei enthält die erste Kautschukmischung wenigstens einen hellen anorganischen Füllstoff und/oder ein Buntpigment und die zweite Kautschukmischung wenigstens einen Ruß. Wenn der Fahrzeugreifen umlaufend unterschiedliche Bereiche 1a aufweist, in denen die erste Kautschukmischung axial außen sichtbar ist, sind durch diese Bereiche ein Schriftzug oder sonstige Zeichen auf der Seitenwand 10 abgebildet. Es ist auch denkbar, dass der Bereich 1a umlaufend die gleichen Ausmaße hat, sodass umlaufend ein heller oder bunter Streifen auf der Seitenwand 10 sichtbar ist.
Die nach axial außen sichtbaren Bereiche 1a können im Verhältnis zu der zweiten Kautschukmischung 2 sämtliche denkbaren Dimensionen annehmen. In Fig. 4 ist der Bereich 1a lediglich schematisch gezeigt.

In Fig. 5 ist der gleiche Ausschnitt gezeigt wie in Fig. 4 mit dem Unterschied, dass die erste Kautschukmischung 1 in Form von räumlich voneinander getrennten Teilabschnitten 5 ausgeführt ist. Hierbei sind in Fig. 5 exemplarisch mehrere Möglichkeiten bezüglich der Anordnung der ersten Kautschukmischung 1 und der zweiten Kautschukmischung 2 zueinander gezeigt. Der Teilabschnitt 5a der ersten Kautschukmischung ist nach axial außen nicht bedeckt und damit sichtbar.
Der Teilabschnitt 5b der ersten Kautschukmischung ist nach axial außen von der zweiten Kautschukmischung 2 bedeckt und damit nicht sichtbar.
Der Teilabschnitt 5c der ersten Kautschukmischung ist nach axial außen teilweise bedeckt und damit teilweise sichtbar.
Die gezeigten Möglichkeiten können innerhalb einer Seitenwand einzeln auftreten oder beliebig miteinander kombiniert werden.

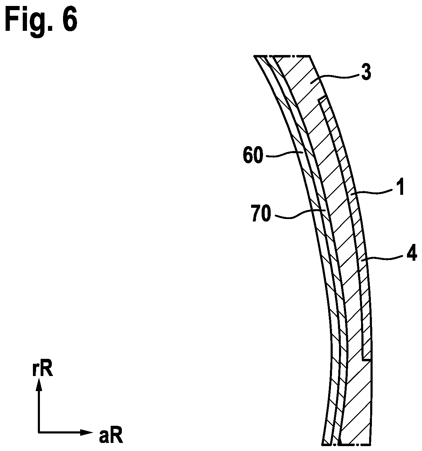

In Fig. 6 ist der gleiche Ausschnitt gezeigt wie in Fig. 3 mit dem Unterschied, dass die erste Kautschukmischung enthaltend wenigstens ein Butyl-Kautschuk-Ionomer im Vergleich zu der weiteren Kautschukmischung 3 dünner ausgeführt ist als es in Fig. 3 der Fall ist. Die Dicke der ersten Kautschukmischung beträgt beispielsweise 0,5 mm. Hierbei enthält die erste Kautschukmischung wenigstens einen Ruß und ist damit schwarz. Ferner enthält die Kautschukmischung in dieser Ausführungsform bevorzugt 10 bis 30 phr wenigstens eines EPDM-Kautschuks. Gemäß dieser Ausführungsform bedeckt eine Butyl-Kautschuk-Ionomer-haltige Kautschukmischung eine herkömmliche Seitenwandmischung, die wenigstens einen Dienkautschuk enthält, der ausgewählt ist aus der Gruppe bestehend aus Butadien-Kautschuk, Naturkautschuk und Styrol-Butadien-Kautschuk.

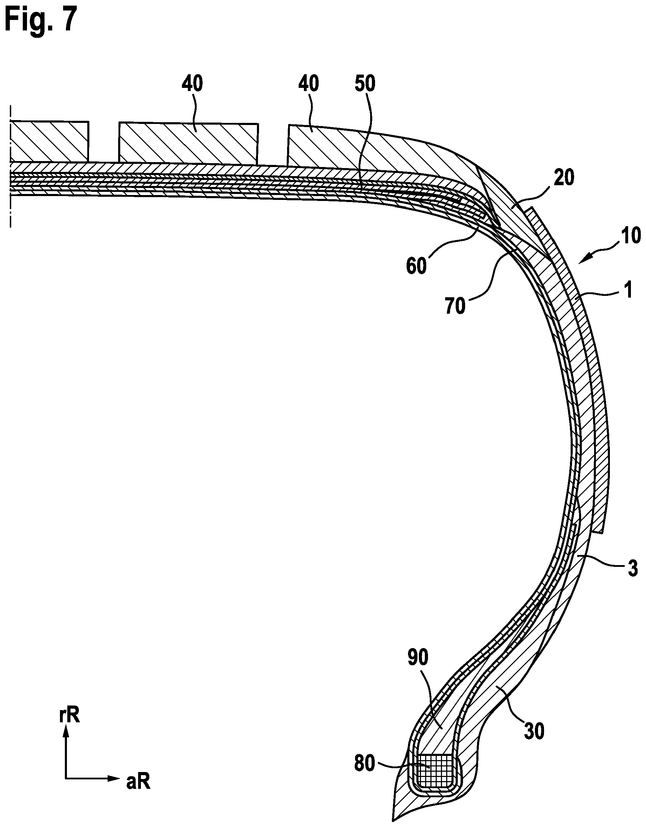

In Fig. 7 ist wie in Fig. 1 eine schematische Darstellung einer Hälfte eines Querschnitts eines erfindungsgemäßen Fahrzeugreifens gezeigt, mit dem Unterschied, dass die Seitenwand 10 derart ausgeführt ist, dass die erste Kautschukmischung 1 eine weitere Kautschukmischung 3 der Seitenwand 10 bedeckt. Zusätzlich bedeckt die erste Kautschukmischung 1 der Seitenwand 10 den Schulterstreifen 20 teilweise nach axial außen. Hierdurch ist der Schulterstreifen 20 nach axial außen vor Abrieb geschützt und die Seitenwand 10 kann auch in diesem Bereich dekorativ ausgestaltet werden.

Es ist auch denkbar, dass Schulterstreifen 20 und die erste Kautschukmischung 1 der Seitenwand 10 derart ausgeführt sind, dass die erste Kautschukmischung 1 den Schulterstreifen 20 nach axial außen vollständig bedeckt, was in Fig. 7 nicht gezeigt ist.

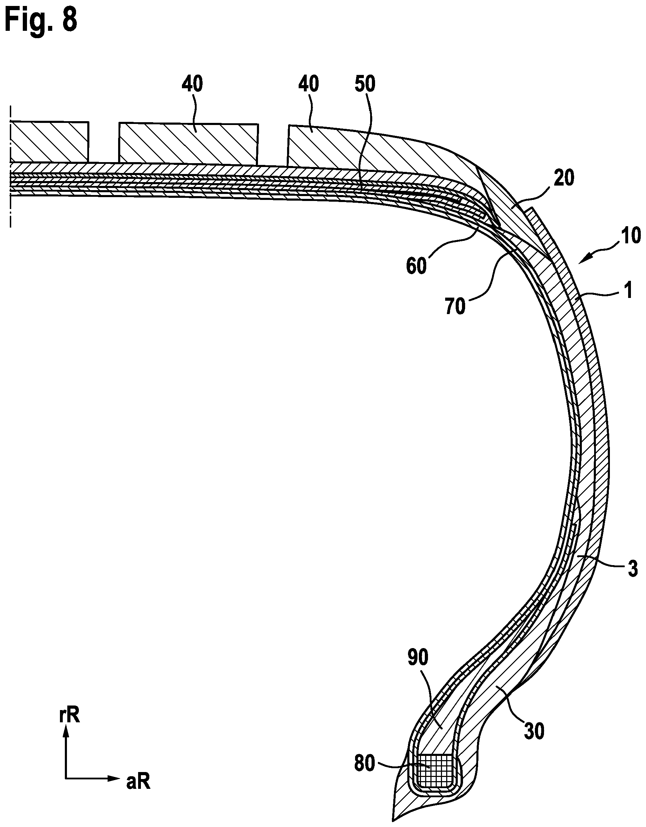

In Fig. 8 ist wie in Fig. 7 eine schematische Darstellung einer Hälfte eines Querschnitts eines erfindungsgemäßen Fahrzeugreifens gezeigt, mit dem Unterschied, dass die Seitenwand 10 derart ausgeführt ist, dass die erste Kautschukmischung 1 eine weitere Kautschukmischung 3 der Seitenwand 10 und teilweise den Schulterstreifen 10 und zusätzlich einen teilweise das Hornprofil 30 nach axial außen bedeckt.

Es ist auch denkbar, dass die erste Kautschukmischung 1 das Hornprofil 30 vollständig nach axial außen bedeckt, was in Fig. 8 nicht gezeigt ist.

Ferner ist es denkbar, dass die erste Kautschukmischung 1 nur Hornprofil 30 und weitere Kautschukmischung 3 der Seitenwand bedeckt (und nicht den Schulterstreifen).

Die in den Fig. 7 und 8 gezeigte erste Kautschukmischung 1 der Seitenwand 10 kann hell oder bunt sein und enthält hierzu einen hellen anorganischen Füllstoff und/oder wenigstens ein Buntpigment.
Die in den Fig. 7 und 8 gezeigte erste Kautschukmischung 1 der Seitenwand 10 kann auch schwarz sein und enthält hierzu wenigstens einen Ruß und bevorzugt 10 bis 30 phr wenigstens eines EPDM-Kautschuks.

Prinzipiell sind alle genannten Kautschukmischungen der Seitenwand und deren Anordnungen miteinander zu Ausführungsformen kombinierbar.

Im Folgenden wird der Vorteil der Erfindung anhand von Tabelle 1 gezeigt.
Die mit "E" gekennzeichneten Mischungen sind hierbei erfindungsgemäße Beispiele für die wenigstens eine erste Kautschukmischung der Seitenwand, während es sich bei den mit "V" gekennzeichneten Mischungen um Vergleichsbeispiele handelt.
Die Mischungsherstellung erfolgte nach dem in der Kautschukindustrie üblichen Verfahren unter üblichen Bedingungen in zwei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 175 °C, Zieltemperaturen von 152 bis 167 °C, vermischt wurden. Durch Zugabe des Vulkanisationssystems in der zweiten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t₉₅ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) und 70 °C mittels Durometer gemäß DIN ISO 7619-1
- Rückprallelastizität bei RT und 70°C gemäß DIN 53 512
- Zugfestigkeit, Bruchdehnung, Spannungswert bei 300% Dehnung (M300) bei Raumtemperatur (RT) gemäß DIN 53 504
- Abrieb bei Raumtemperatur gemäß DIN/ISO 4649
- Kaltfluss in Anlehnung an ISO1133; Angabe der Verformung in %.

### Verwendete Substanzen

a) Chlorobutyl-Kautschuk
b) X Butyl™ I4565 P, Fa. Lanxess
c) Weichmacher, Stearinsäure, 3 phr ZnO, Verarbeitungshilfsmittel
d) Schwefel und Beschleuniger

Wie an Tabelle 1 erkennbar, weisen die Kautschukmischungen der erfindungsgemäßen Beispiele E1 bis E4 enthaltend wenigstens ein Butyl-Kautschuk-Ionomer im Vergleich zu V1 (ohne wenigstens ein Butyl-Kautschuk-Ionomer) eine verbesserte Abriebbeständigkeit und zudem bessere Kaltflusseigenschaften auf. Die Kaltflusseigenschaften sind ein Maß für die Verarbeitbarkeit, wobei eine geringere Verformung vorteilhaft ist.

E2 weist überraschenderweise ein besonders gutes Abriebverhalten und eine vergleichsweise hohe Bruchdehnung auf. E4 weist überraschenderweise ein besonders gutes Abriebverhalten und sehr gute Kaltflusseigenschaften auf. Die Seitenwand des erfindungsgemäßen Fahrzeugreifens ist somit insbesondere hinsichtlich Abrieb optimiert, wobei sie zudem eine sehr gute Verarbeitbarkeit und sehr gute sonstige Eigenschaften, insbesondere sehr gute Reißeigenschaften, aufweist. Somit ist es möglich, in der Seitenwand des erfindungsgemäßen Fahrzeugreifens bunte oder dekorative Elemente einzusetzen und somit gleichzeitig ausgehend von dem Stand der Technik eine verbesserte Haltbarkeit des Reifens zu erzielen.

**Tabelle 1**

| **Bestandteile** | **Einheit** | **V1** | **E1** | **E2** | **E3** | **E4** |
|---|---|---|---|---|---|---|
| CHR ^{a)} | phr | 100 | 95 | 90 | 85 | 80 |
| Ionomer ^{b)} | phr | - | 5 | 10 | 15 | 20 |
| Ruß N660 | phr | 55 | 55 | 55 | 55 | 55 |
| Sonstige Zusatzstoffe ^{c)} | phr | 21 | 21 | 21 | 21 | 21 |
| Vulka ^{d)} | phr | 1,8 | 1,8 | 1,8 | 1,8 | 1,8 |
| | | | | | | |

| **Eigenschaften** | | | | | | |
|---|---|---|---|---|---|---|
| Härte RT | Shore A | 48 | 51 | 48 | 50 | 50 |
| Härte 70 °C | Shore A | 37 | 40 | 36 | 37 | 37 |
| Rückpr. RT | % | 9 | 9 | 9 | 9 | 9,5 |
| Rückpr. 70 °C | % | 36 | 37 | 37 | 36 | 37 |
| M300 | MPa | 2,9 | 3,4 | 3,0 | 3,3 | 3,6 |
| Zugfestigkeit | MPa | 8,7 | 9,1 | 8,9 | 9,4 | 9,0 |
| Bruchdehnung | % | 934 | 895 | 889 | 910 | 833 |
| Abrieb | mm³ | 745 | 642 | 616 | 676 | 620 |
| Kaltfluss | % | 38 | 30 | 23 | 16 | 14 |

### Bezugszeichenliste

### (Teil der Beschreibung)

1 Erste Kautschukmischung (der Seitenwand)
1a Bereich der Seitenwand, in der die erste Kautschukmischung die axiale Begrenzung des Reifens darstellt
2 Zweite Kautschukmischung (der Seitenwand)
3 Weitere Kautschukmischung (der Seitenwand)
4 Durchgängiger Abschnitt einer Seitenwandmischung
5 Teilabschnitte einer Seitenwandmischung
5a Teilabschnitt einer Seitenwandmischung, der nach axial außen nicht bedeckt und damit sichtbar ist
5b Teilabschnitt einer Seitenwandmischung, der nach axial außen bedeckt und damit nicht sichtbar ist
5c Teilabschnitt einer Seitenwandmischung, der nach axial außen teilweise bedeckt und damit teilweise sichtbar ist
10 Seitenwand
11 Ausschnitt der Seitenwand, wie in Fig. 2
20 Schulterstreifen
30 Hornprofil
40 Laufstreifen mit Profilblöcken
50 Gürtelpaket
60 Innenschicht
70 Karkasslage
80 Wulstkern
90 Wulstkernreiter
rR radiale Richtung
aR axiale Richtung

## Patentansprüche

1. Fahrzeugreifen, umfassend wenigstens eine Seitenwand (10), die wenigstens eine erste Kautschukmischung (1) aufweist, die wenigstens ein Butyl-Kautschuk-Ionomer enthält.

2. Fahrzeugreifen nach dem vorhergehenden Anspruch, **dadurch gekennzeichnet, dass** die Seitenwand (10) wenigstens eine zweite Kautschukmischung (2) aufweist, die wenigstens ein Butyl-Kautschuk-Ionomer enthält.

3. Fahrzeugreifen, nach einem der vorherigen Ansprüche, **dadurch gekennzeichnet, dass** die Seitenwand (10) wenigstens eine weitere Kautschukmischung (3) aufweist.

4. Fahrzeugreifen nach Anspruch 3, **dadurch gekennzeichnet, dass** die erste Kautschukmischung (1) und/oder die zweite Kautschukmischung (2) vollständig oder teilweise radial und axial außerhalb der weiteren Kautschukmischung (3) angeordnet sind und zumindest Bereiche der ersten (1) und/oder der zweiten (2) Kautschukmischung den Fahrzeugreifen nach radial und axial außen begrenzen.

5. Fahrzeugreifen nach Anspruch 3 oder 4, **dadurch gekennzeichnet, dass** die erste Kautschukmischung (1) in Form eines durchgängigen Abschnittes (4) oder in Form von zwei oder mehreren räumlich voneinander getrennten Teilabschnitten (5) der Seitenwand (10) ausgeführt ist.

6. Fahrzeugreifen nach einem der Ansprüche 2 bis 5, **dadurch gekennzeichnet, dass** die zweite Kautschukmischung (2) die erste Kautschukmischung (1) vollständig oder teilweise nach radial und axial außen bedeckt.

7. Fahrzeugreifen nach einem der vorherigen Ansprüche, **dadurch gekennzeichnet, dass** das Butyl-Kautschuk-Ionomer einen Ionen-Gehalt von 0,2 bis 1,0 mol-% aufweist.

8. Fahrzeugreifen nach einem der Ansprüche 3 bis 7, **dadurch gekennzeichnet, dass** die weitere Kautschukmischung (3) als Kautschukkomponenten wenigstens einen Kautschuk enthält, der ausgewählt ist aus der Gruppe bestehend aus Butadien-Kautschuk, Naturkautschuk und Styrol-Butadien-Kautschuk.

9. Fahrzeugreifen nach einem der vorherigen Ansprüche, **dadurch gekennzeichnet, dass** die erste Kautschukmischung (1) wenigstens ein Buntpigment aufweist.

10. Fahrzeugreifen nach einem der Ansprüche 1 bis 9, **dadurch gekennzeichnet, dass** die erste Kautschukmischung (1) wenigstens einen anorganischen hellen Füllstoff und/oder ein Weißpigment enthält.

11. Fahrzeugreifen nach einem der Ansprüche 9 oder 10, **dadurch gekennzeichnet, dass** die erste Kautschukmischung (1) frei von Ruß ist.

12. Fahrzeugreifen nach einem der Ansprüche 2 bis 11, **dadurch gekennzeichnet, dass** die zweite Kautschukmischung (2) 1 bis 100 phr wenigstens eines Rußes enthält.

13. Fahrzeugreifen nach einem der Ansprüche 2 bis 12, **dadurch gekennzeichnet, dass** die erste Kautschukmischung (1) und/oder die zweite Kautschukmischung 5 bis 30 phr wenigstens eines Ethylen-Propylen-Dien-Kautschuks (EPDM) enthalten.

14. Fahrzeugreifen nach einem der Ansprüche 2 bis 13, **dadurch gekennzeichnet, dass** er einen Schulterstreifen (20) und ein Hornprofil (30) aufweist und die erste (1) und/oder die zweite Kautschukmischung (2) so angeordnet sind, dass sie nach axial außen den Schulterstreifen (20) und/oder das Hornprofil (30) vollständig oder zumindest teilweise bedecken.

## Claims

1. Vehicle tyre comprising at least one sidewall (10) which comprises at least one rubber mixture (1) containing at least one butyl rubber ionomer.

2. Vehicle tyre according to the preceding claim, **characterized in that** the sidewall (10) comprises at least one second rubber mixture (2) containing at least one butyl rubber ionomer.

3. Vehicle tyre according to any of the preceding claims, **characterized in that** the sidewall (10) comprises at least one further rubber mixture (3).

4. Vehicle tyre according to Claim 3, **characterized in that** the first rubber mixture (1) and/or the second rubber mixture (2) are arranged radially and axially outwards of the further rubber mixture (3) in full or in part and at least regions of the first (1) and/or of the second (2) rubber mixture radially and axially outwardly delimit the vehicle tyre.

5. Vehicle tyre according to Claim 3 or 4, **characterized in that** the first rubber mixture (1) is in the form of an uninterrupted section (4) or in the form of two or more spatially separate subsections (5) of the sidewall (10).

6. Vehicle tyre according to any of Claims 2 to 5, **characterized in that** the second rubber mixture (2) radially and axially outwardly covers the first rubber mixture (1) in full or in part.

7. Vehicle tyre according to any of the preceding claims, **characterized in that** the butyl rubber ionomer has an ion content of 0.2 to 1.0 mol%.

8. Vehicle tyre according to any of Claims 3 to 7, **characterized in that** the further rubber mixture (3) contains as rubber components at least one rubber selected from the group consisting of butadiene rubber, natural rubber and styrene-butadiene rubber.

9. Vehicle tyre according to any of the preceding claims, **characterized in that** the first rubber mixture (1) comprises at least one colour pigment.

10. Vehicle tyre according to any of Claims 1 to 9, **characterized in that** the first rubber mixture (1) contains at least one inorganic light-coloured filler and/or a white pigment.

11. Vehicle tyre according to either of Claims 9 or 10, **characterized in that** the rubber mixture (1) is free from carbon black.

12. Vehicle tyre according to any of Claims 2 to 11, **characterized in that** the second rubber mixture (2) contains 1 to 100 phr of at least one carbon black.

13. Vehicle tyre according to any of Claims 2 to 12, **characterized in that** the first rubber mixture (1) and/or the second rubber mixture contain 5 to 30 phr of at least one ethylene-propylene-diene rubber (EPDM).

14. Vehicle tyre according to any of Claims 2 to 13, **characterized in that** it comprises a shoulder strip (20) and a flange profile (30) and the first (1) and/or the second rubber mixture (2) are arranged such that they radially outwardly cover the shoulder strip (20) and/or the flange profile (30) in full or in part.

## Revendications

1. Pneu de véhicule, comprenant au moins une paroi latérale (10), qui comprend au moins un premier mélange de caoutchouc (1), qui contient au moins un ionomère de caoutchouc de butyle.

2. Pneu de véhicule selon la revendication précédente, **caractérisé en ce que** la paroi latérale (10) comprend au moins un deuxième mélange de caoutchouc (2), qui contient au moins un ionomère de caoutchouc de butyle.

3. Pneu de véhicule selon l'une quelconque des revendications précédentes, **caractérisé en ce que** la paroi latérale (10) comprend au moins un mélange de caoutchouc supplémentaire (3).

4. Pneu de véhicule selon la revendication 3, **caractérisé en ce que** le premier mélange de caoutchouc (1) et/ou le deuxième mélange de caoutchouc (2) sont agencés en totalité ou en partie radialement et axialement à l'extérieur du mélange de caoutchouc supplémentaire (3) et au moins des zones du premier (1) et/ou du deuxième (2) mélange de caoutchouc délimitent le pneu de véhicule radialement et axialement vers l'extérieur.

5. Pneu de véhicule selon la revendication 3 ou 4, **caractérisé en ce que** le premier mélange de caoutchouc (1) est réalisé sous la forme d'une section continue (4) ou sous la forme de deux ou davantage de sections partielles (5), séparées les unes des autres dans l'espace, de la paroi latérale (10).

6. Pneu de véhicule selon l'une quelconque des revendications 2 à 5, **caractérisé en ce que** le deuxième mélange de caoutchouc (2) recouvre le premier mélange de caoutchouc (1) en totalité ou en partie radialement et axialement vers l'extérieur.

7. Pneu de véhicule selon l'une quelconque des revendications précédentes, **caractérisé en ce que** l'ionomère de caoutchouc de butyle présente une teneur en ions de 0,2 à 1,0 % en moles.

8. Pneu de véhicule selon l'une quelconque des revendications 3 à 7, **caractérisé en ce que** le mélange de caoutchouc supplémentaire (3) contient en tant que composant caoutchouc au moins un caoutchouc qui est choisi dans le groupe constitué par le caoutchouc de butadiène, le caoutchouc naturel et le caoutchouc de styrène-butadiène.

9. Pneu de véhicule selon l'une quelconque des revendications précédentes, **caractérisé en ce que** le premier mélange de caoutchouc (1) comprend au moins un pigment coloré.

10. Pneu de véhicule selon l'une quelconque des revendications 1 à 9, **caractérisé en ce que** le premier mélange de caoutchouc (1) contient au moins une charge inorganique claire et/ou un pigment blanc.

11. Pneu de véhicule selon l'une quelconque des revendications 9 ou 10, **caractérisé en ce que** le premier mélange de caoutchouc (1) est exempt de noir de carbone.

12. Pneu de véhicule selon l'une quelconque des revendications 2 à 11, **caractérisé en ce que** le deuxième mélange de caoutchouc (2) contient 1 à 100 pce d'au moins un noir de carbone.

13. Pneu de véhicule selon l'une quelconque des revendications 2 à 12, **caractérisé en ce que** le premier mélange de caoutchouc (1) et/ou le deuxième mélange de caoutchouc contiennent 5 à 30 pce d'au moins un caoutchouc d'éthylène-propylène-diène (EPDM).

14. Pneu de véhicule selon l'une quelconque des revendications 2 à 13, **caractérisé en ce qu'**il comprend une bande d'épaulement (20) et un profilé de terminaison (30) et le premier (1) et/ou le deuxième mélange de caoutchouc (2) sont agencés de telle sorte qu'ils recouvrent axialement vers l'extérieur la bande d'épaulement (20) et/ou le profilé de terminaison (30) en totalité ou au moins en partie.
